# EUROPEAN PATENT APPLICATION

(11) **EP 3 032 158 A1**
(43) Date of publication of application: **15.06.2016**
(21) Application number: 14834929.3
(22) Date of filing: 07.08.2014
(51) Int. Cl.: F16L 19/02, F16L 23/04

(54) **SEAL RING STRUCTURE FOR HIGH-PRESSURE PIPE JOINT**

(30) Priority: 07.08.2013 JP 2013164153; 27.09.2013 JP 2013200784
(71) Applicant: Shinohara Co., Ltd., Kobe-shi, Hyogo 651-2243 (JP)
(72) Inventor: SHINOHARA, Mitsukazu, Kobe-shi Hyogo 651-2243 (JP); SHINOHARA, Hisayuki, Kobe-shi Hyogo 651-2243 (JP)
(74) Representative: Casalonga
(86) International application number: PCT/JP2014/004135
(87) International publication number: WO 2015/019622

(57) **Abstract**

Provided is a seal ring structure for a high-pressure pipe joint that is capable of improving the sealing performance and vibration resistance of a pipe joint. The seal ring structure comprises a seal ring and a retainer. The seal ring is donut shaped. A cross-section of the seal ring comprises a quadrangle having two diagonal lines that are orthogonal to each other. One diagonal line is parallel to a planar perpendicular line formed by the donut shape, and opposing vertexes on the diagonal lines are in contact with the end face of each joint. The retainer is able to engage with the peripheral edge of the joint end face.

## Description

### [Technical Field]

This invention relates to a seal ring structure of a joint for high pressure pipes aiming higher efficiency of pipe exchange operation.

### [Background Art]

In the case of a conventional joint for high pressure pipes, an arrangement wherein a gland nut 52 is inserted and screwed 51 to the end of a pipe 50 to establish fixation, which is attached by screwing into a screw hole 62 at the joint main body 60 to establish communication of a through hole 61 of the joint main body and inner void 11 of a pipe 50.

However, in the case of a conventional joint for high pressure pipes, due to the fact that pipes are fixed by a line seal at the tip of the pipe, which prevents from applying a large torque leading to low vibration resistance. Under such circumstances, a joint for high pressure pipes realizing the higher seal efficiency and the higher vibration resistance is desired.

Note that, in the case of a pipe joint disclosed in the patent literature 1, seal efficiency is improved by using a clamp possessing plurality of deformed nails projecting toward the inside of the band portion that covers the fitting portion of both bands for coupling of the pipe. (Refer to the patent literature 1) However, it is difficult to use the pipe j oint disclosed in the patent literature 1 for high pressure pipes.

### [Prior Art]

### [Patent literature]

[Patent literature 1] JP 1997-196270 A

### [Outline of the Invention]

### [Problems to be solved by the Invention]

In view of such circumstances, this invention aims to present a seal ring structure for a joint for high pressure pipes with improved seal efficiency and vibration resistance.

### [Means to Solve the Objects]

In order to accomplish the purpose mentioned above, the seal ring structure according to the present invention is configured with a seal ring and a retainer. The seal ring is donut shaped and a cross section thereof being a square possessing a pair of diagonal lines orthogonal to each other and one of the diagonal lines is in parallel to the perpendicular line of a plane formed in donut shape and the opposing pinnacles on the diagonal lines abuts against the end surface of each j oint. And the retainer can be engaged with the periphery of the end surface of the joint.

According to the seal ring structure for a joint for high pressure pipes mentioned above, the seal efficiency and the vibration resistance of the joint for pipes can be improved. Here, the joint for pipes are suitably used, for example, for an abutting portion disposed at the top of two pipes.

Specific explanation is that the joint for high pressure pipes is a pipe joint for connecting the first pipe and the second pipe, and this pipe joint possesses a first joint to be connected to the first pipe, a second joint to be connected to the second pipe and a band portion for covering the butting portion of the first joint and the second joint, and is configured with a clamp for connecting the first joint and the second joint in an abutted state and a tightening bolt for contracting the inner diameter of the band portion by the tightening operation, the seal ring according to the present invention is employed for maintaining the seal efficiency at the butting portion mentioned above.

The outer diameter of each end portion of the first joint and the second joint at the butted portion mentioned above is configured to be larger than the outer diameter of the middle portion between the first joint and the second joint and the inner surface of the band portion is formed in such a way that each end portion of the first joint and the second joint are fitted with the inner peripheral surface of the band portion at a clamp in the butted state of the first joint and the second joint.

Also, for the connection between the pipe and the joint, the connection by a conventionally known configuration, namely a method wherein a fixation structure comprising a gland nut being inserted and screwed to a pipe from the end portion thereof is screwed into the screw hole of the joint can be employed. Another configuration in which a pipe and a joint are connected by welding is also acceptable.
Also, the tightening bolt can be screwed, a combination of a bolt and a nut to be screwed and other conventional members that can be screwed.

Here, high pressure pipes are pipes generally called high pressure pipes to be used for the high pressure above 14.7 MPa. Note that this pipe can be used for the medium pressure around 5 MPa.

Also, various kinds of pipes different in size and use are included in the first pipe and the second pipe mentioned above, and further various kinds of valves such as safety valves, closing valves, check valves, decompression valves, globe valves and machineries such as filters, orifice valves, pressure gauges, flow meters, heat exchangers, compressors and pressure vessels are also included conceptually. Namely, the joint for high pressure pipes according to the present invention can be applied not only to a joint between pipes but also to a joint between a pipe and a machinery, also to a joint between machineries and a mechanism for connecting a joint to another joint. As another mode of joint usage such as a joint between a pipe and a machinery, and a joint between machineries, the shape of the end portion of the pipe-shaped joint integrated with and projecting from the main body of the machinery can be configured to be larger than the pipe outer diameter of the intermediate portion positioned at the side of the machinery main body from the end portion of the pipe shaped joint. In that case, the pipe of the machinery main body as the first pipe or the second pipe and the first joint or the second joint, have an integrated structure. Namely, the machinery is to be selected from the group of safety valves, closing valves, check valves, decompression valves, globe valves and machineries such as filters, orifice valves, pressure gauges, flow meters, heat exchangers, compressors and pressure vessels, and the first pipe or the second pipe is the one projecting from the machinery main body, and the end portion of the first pipe or the second pipe can be processed to be used as the first joint or the second joint.
Also, the mechanism for connecting a joint and another joint is such that the shape of the end portion of the joint is processed or welded into the shape of the first joint or the second joint as mentioned above to be fixed to each other by a clamp while the end portion of a joint and the end portion of a joint are butted each other.

According to such a configuration, the first joint and the second joint can be shifted from the coaxial state by removing the clamp, which makes the pipe extraction margin unnecessary and resultantly provides higher efficiency of the pipe exchange work.
The seal efficiency can be improved from the viewpoint of the pipe joint sealing. Furthermore, according to the configuration mentioned above, the tip of the pipe is connected to the joint and the vibration resistance can be improved because vibration can be absorbed at the butted portion of the joints.

The seal ring in the joint for high pressure pipes of the present invention is preferably O-rings made of a metal material or resin. The retainer for positioning of the seal ring mentioned above is furnished with a plural number of claws at the entire circumference of the seal ring or at a circumference of the seal ring and this seal ring is to be engaged with a ditch and so on disposed at the circumference of the joint end portion. Another type of retainer with a claw portion disposed at a pedestal with a seal ring abutted thereto can be applicable.
Here, the metal material is preferably copper, brass or nickel, but not limited to these materials. The reason that cupper, brass and nickel are preferable is that the strength of these metals is relatively weak among metals and the change in shape is easy to occur. If the change in shape is easy to occur, the change in shape develops in a direction to heighten the seal efficiency by a deformation of the contact portion with an end surface caused by a pressure when the seal efficiency based on abutting with the end surface is not enough.

By employing such a configuration, the seal efficiency can be further improved.
Also, the seal efficiency can be further improved by employing an O-ring. The ditch for an O-ring is to be made at the end portion of the joint, and the ditch can be made at one of the both end surfaces or both end surfaces for butting in this case.

The taper angle of the outer peripheral wall of the seal ring is preferably wider by 0° to 2° or narrower by 0° to 2° than the taper angle of the inner peripheral surface of the recess so that the seal ring and the recess are configured to be fitted where a plate shaped recess is formed at the center of the end surface of the joint.

Here, the taper angle of the inner peripheral surface of the recess is 10° to 80°, preferably 50° to 70°, and further preferably about 60°.

By employing the configuration mentioned above, the adhesiveness between the outer peripheral wall in tapered shape disposed at the end surface and the seal ring is strengthened, which improves the seal efficiency and the pressure resistance.
Here, the reason for making the taper angle of the inner peripheral surface of the recess larger than the taper angle of the outer peripheral surface of the sealing by 0° to 2° is that the taper angle of the outer peripheral surface of the seal ring is widened to become virtually the same as the taper angle of the inner peripheral surface of the recess resulting in the close fitting of the both. Note that the taper angle of the inner peripheral surface of the recess is preferably made to be wider than the taper angle of the outer peripheral surface of the seal ring by about 1°.

Also, by making the taper angle of the inner peripheral surface of the recess narrower than the taper angle of the outer peripheral surface of the seal ring by 0° to 2°, the seal ring becomes abutted at first to the edge portion being a boundary between the tapered outer peripheral surface and the end surface when the seal ring is butted against the end surface of the pipe joint, and the sealing can become secure at the above mentioned edge portion due to expansion of the taper angle of the outer peripheral surface of the seal ring when a force is exerted at the edge surface of the pipe joint in the butting direction. Note that the taper angle of the inner peripheral surface of the recess is preferably made to be narrower than the taper angle of the outer peripheral surface of the seal ring by about 1°.

Similarly, for a case that a shallow ring shaped recess is fo rmed at the end portion of the joint, the taper angle of the outer per ipheral wall of the seal ring is wider by 0° to 2° or narrower by 0° to 2° than the taper angle of the inner peripheral surface of said reces s so that the seal ring can be engaged with the recess.

Here, the taper angle of the inner peripheral surface of the recess is 10° to 80°, preferably 50° to 70°, and further preferably about 60°.

### [Effects of the Invention]

According to the seal ring structure for a joint for high pressure pipes of the present invention, there are effects such as pipe exchange works and machinery exchange works become more efficient and the seal efficiency and the vibration resistance of the pipe joint can be improved.

### [Brief Description of the Drawings]

[Figure 1] An external configuration figure of the seal ring
[Figure 2] An explanatory figure 1 of the seal ring for the joint for high pressure pipes
[Figure 3] An explanatory figure 2 of the seal ring for the joint for high pressure pipes
[Figure 4] A configuration figure 1 of the joint for high pressure pip es
[Figure 5] A configuration figure 2 of the joint for high pressure pip es
[Figure 6] An explanatory figure of a seal ring of other embodiments
[Figure 7] A shape figure of the end surface of the pipe joint
[Figure 8] A variation of the shape of the end surface of the pipe joi nt
[Figure 9] A shape of the end surface of the pipe joint and the seal r ing
[Figure 10] A configuration figure 1 of other joint for high pressure pipes
[Figure 11] A configuration figure 2 of other joint for high pressure pipes
[Figure 12] A configuration figure 3 of other joint for high pressure pipes

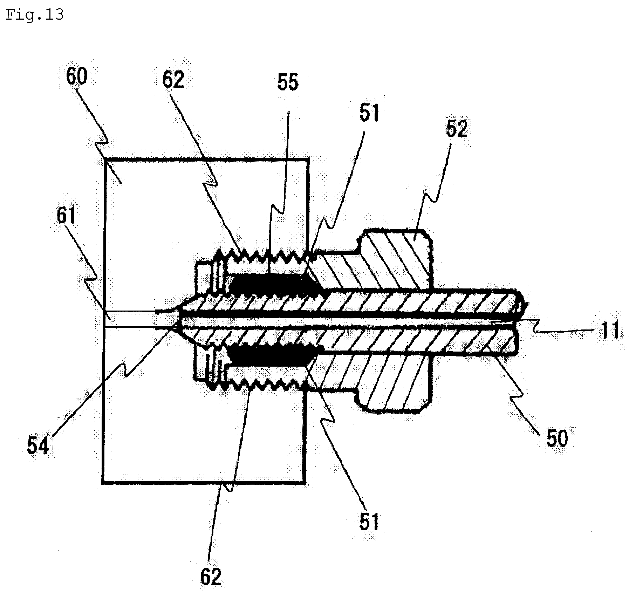

[Figure 13] A configuration figure of the conventional joint for high pressure pipes

### [Best Mode for Carrying Out the Invention]

Embodiments of the present invention will be described in detail below with reference to the drawings. The present invention is not limited to the following embodiment and examples of shown in the figure.

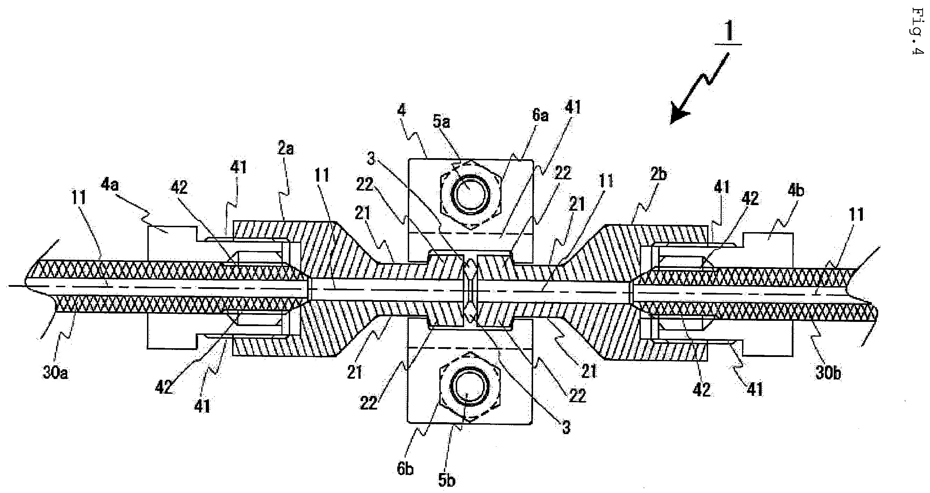

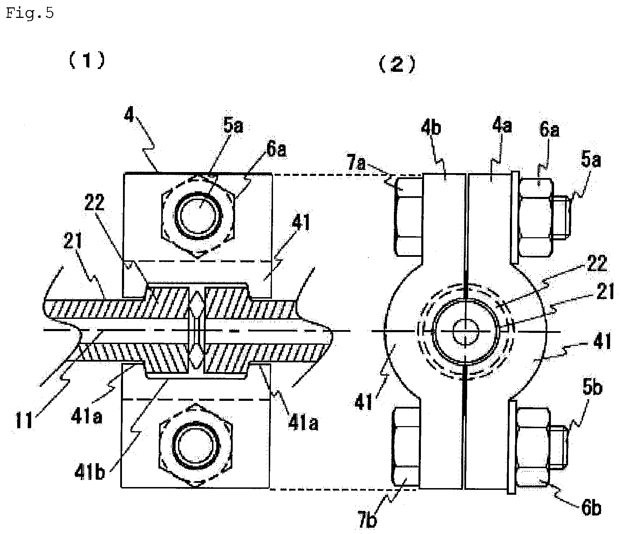

In the first place, with regard to a joint for high pressure pipes, a pipe joint for high pressure pipes 1 for connecting the first pipe 30a and the second pipe 30b is explained by referencing figure 4 and figure 5. As shown in figure 4, the pipe joint 1 has a first joint 2a to be connected to a first pipe 30a, the second joint 2b to be connected to a second pipe 30b and the band portion 41 for covering the butted part of the first joint 2a and the second joint 2b, and is configured with a clamp 4 for connecting the first joint 2a and the second joint 2b in a butted state, a seal ring 3 for maintaining the seal efficiency at the butted portion and two tightening bolts (5a, 5B) for contracting the inner diameter of the band portion 41 by a tightening operation.
The seal ring 3 is made of a metal material and the shape thereof is rhombic in the cut surface along the axis direction and also is abutted against the end surface of the joint opposing at the opposing pinnacle, improving the seal efficiency.

The first joint 2a can be connected to the first pipe 30a by a conventionally known configuration. Namely, a gland nut 4a is inserted and screwed 42 from the end portion of the first pipe 30a to form a fixed arrangement, which is attached to the first joint 2a by engagement into the screw hole whereof. This makes the inner void 11 of the first joint 2a and the inner void 11 of the first pipe 30a communicating. The second joint 2b and the second pipe 30b are also installed in a similar manner as for the first joint 2a and the first pipe 30a. Here, the installation method for the first joint 2a and the first pipe 30a can be performed by a conventionally known method.

As is shown in figure 5 (1), the outer diameter of each end portion 22 of the first joint 2a and the second joint 2b at the butted portion is larger than the outer diameter of the intermediate portion 21 of the first joint 2a and the second joint 2b, and the inner surface 42 of the band portion 41 is formed so that the inner surface 42 of the band portion 41 of the clamp 4 and each end portion 22 of the first joint 2a and the second joint 2b can be fitted in a butting state of the first joint 2a and the second joint 2b. Namely, the first joint 2a and the second joint 2b have a larger outer diameter at the end portion 22 than that at the intermediate portion 21. Note that the diameter of the inner void 11 (inner diameter) does not have any particular difference at the end portion 22 and at the intermediate portion 21. The difference of the outer diameter at the end portion 22 and the one at intermediate portion can be 2 to 3 mm but there is not any particular constraint. As is shown in figure 5 (1), the inner surface 42 of the band portion 41 in clamp 4 is recessed at the central part 41b and the first joint 2a and the second joint 2b and the clamp 4 can be stably connected by the fact that the inner surface 42 of the band portion 41 at the clamp 4 and each end portion 22 of the first joint 2a and the second joint 2b can be fitted under a butting state of the first joint 2a and the second joint 2b.

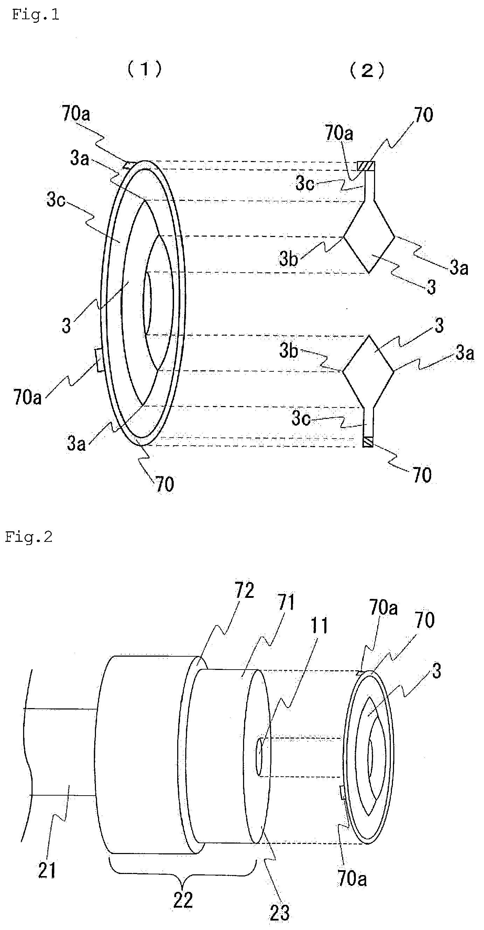

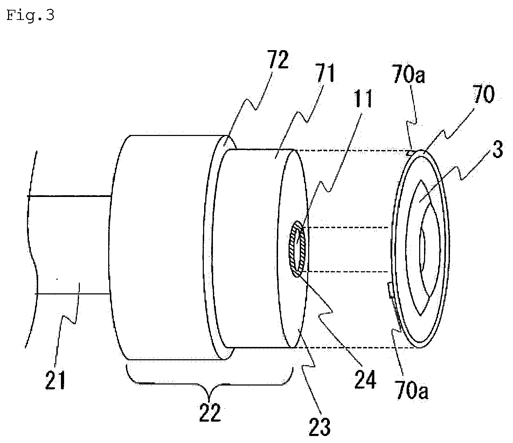

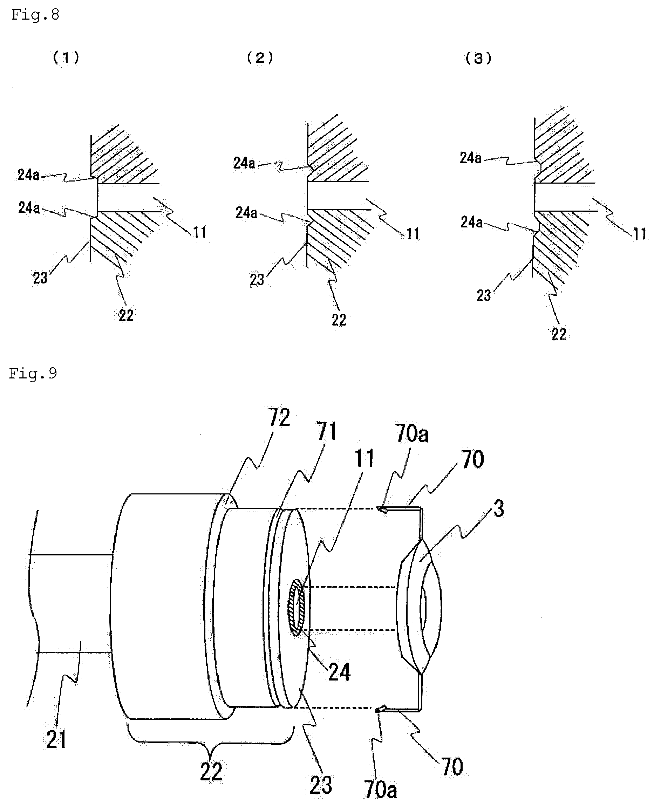

Next, the seal ring of the joint for high pressure pipes is explained by referencing figures 1 to 3.
The seal ring 3 as shown in figures 1 to 3 is made of a metal material such as copper, brass and nickel and has a shape of rhombic at the cut surface along the axis direction and abutting against the end surface of the joint opposing at the opposing pinnacle and further a retainer 70 retainable onto the end surface of said joint is disposed.
A claw portion 70a is disposed at the circumference of the seal ring 3. In figure 1, for the purpose of explanation, the claw portion 70a is disposed at the whole circumference of the seal ring, however, the claw portion can actually be 3 or more such as 3 with an interval of 120° or 4 with an interval of 90° or further, 5 or more claw portions can be disposed. The necessity for the number of claw portions to be more than 3 is that there is a possibility of the seal ring 3 being off the center of the end surface when the seal ring 3 and the end surface are butted with 2 claw portions.
As is shown in figure 1 (2), the claw portion 70a is disposed in such a way that the engagement occurs only at one end portion of the joint. The reason for the claw portion not to be disposed at both ends of the joint is that the detachment of the seal ring 3 becomes difficult if the claw portion is disposed at both end portions of the joint.
A ditch portion 71 is disposed at the circumferential 22 of the joint and this ditch portion 71 and the claw portion 70a are configured to be engaged to each other.
Note that it is preferable to dispose a recess as shown in figure 8 at the end portion 22 of the joint, considering the thickness of the claw part 70a of the seal ring 3.

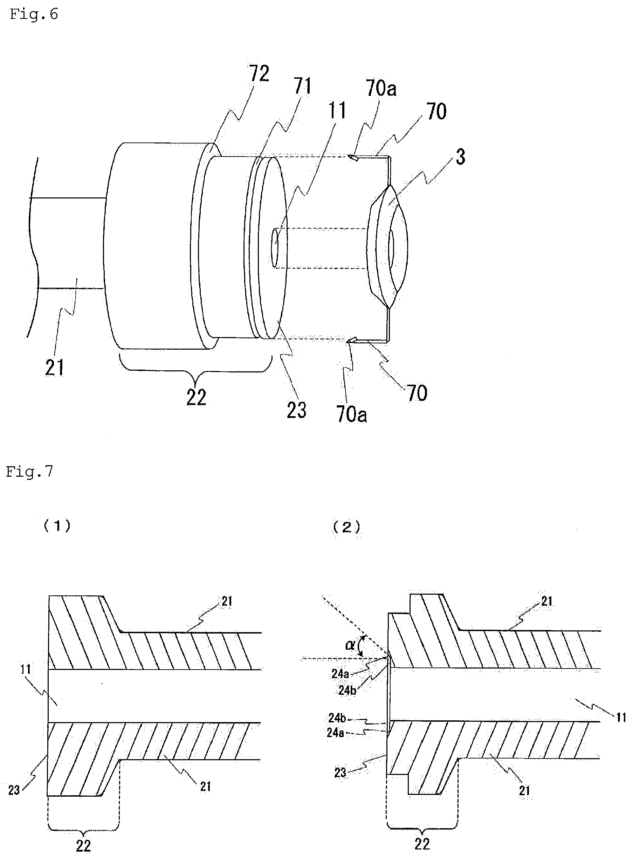

Figure 7 shows a shape diagram of the end surface of a pipe joint. Figure 7 (1) shows a cross section of a joint. The end surface 23 of the end portion 22 of a joint is flat (flush) without a recess. Note that number 11 represents an inner void of a pipe passing through the end surface 23. However, the inner void is shown as if it is closed at the end surface 23 for convenience of explanation in the cross section in figure 9. With regard to the end surface of the joint, a shallow plate shaped recesses (24a, 24b) are formed at the center of the end surface 23 of the end portion 22 of the joint. The taper angle α of the inner peripheral surface of the recess is made to be larger than the taper angle of the outer peripheral wall of the seal ring by 1°.
Here, it is presumed that a seal ring the cut surface thereof is rhombic shaped along the axis direction, abutted against the end surface of the joint opposing at the opposing pinnacle and made of a metal material is used.
The taper angle α at the inner peripheral surface of this recess is 59°. This is made to be larger than the taper angle 58 of the outer peripheral wall of the seal ring by 1°. Also, the depth of the recess is 0.3 mm.

Figure 8 shows a shape variation of the end surface of the pipe joint. Figure 8 (1) represents a formation of a shallow plate shaped recess at the center of the end surface 23 of the joint. The inner peripheral surface of the recess has a formed taper 24a and improves seal efficiency by abutting against the outer peripheral wall of the seal ring.

The shape of the end surface of the pipe joint and an image of the seal ring are shown in figure 9. When compared with figure 7, it is seen that a recess 24 of a shallow plate shape or a ring shape is formed at the center of the end surface 23 of the joint.

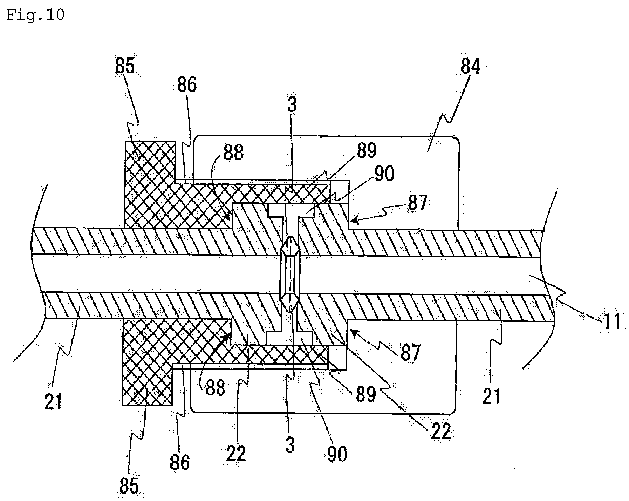

Next, the configuration of a joint for high pressure pipes is explained by referencing figure 10.
The joint for high pressure pipes employs a seal ring 3 the cut surface thereof is rhombic shaped along the axis direction, abutted against the end surface of the joint opposing at the opposing pinnacle, and made of a metal material is used. A recess of a shallow plate shape or a ring shape is formed at the center of the end surface of each end portion 22 of two pipe joints.
Also, the taper angle α at the inner peripheral surface of the recess is 59°. This is made to be larger than the taper angle 58° of the outer peripheral wall of the seal ring by 1°. Also, the depth of the recess is 0.3 mm.
By configuring the end face of the joint as above, adhesiveness between the tapered outer peripheral wall disposed at the end surface and the seal ring is strengthened, the seal effectiveness is improved and the pressure resistance is heightened.

The joint for high pressure pipes is a pipe joint for connecting the first pipe and the second pipe and is configured with 1) to 5) below.
1) Configured with the first joint (the joint on the left side in figure 10) to be connected to the first pipe (not illustrated), the end portion 22, the intermediate portion 21 and the bump portion 88, having an internal void 11
2) Configure with the second joint (the joint on the right side in figure 10) to be connected to the second pipe (not illustrated), the end portion 22, the intermediate portion 21 and the bump portion 87, having an internal void 11
3) a male screw portion 85 having a through hole with a male screw 86 being formed at the outer peripheral portion
4) a female nut 84 of a cat nut shape to be screwed and fixed to the male nut 85 a seal ring 3 for maintaining seal effectiveness of the abutting portion
5) a seal ring 3 for maintaining a seal efficiency at the butting portion It is made of a metal material and have a rhombic shape in the cut surface along the axis direction and abutted against the end surface of the joint opposing at the opposing pinnacle.

In 1) and 2) described above, the outer diameter of each end portion 22 of the first joint and the second joint at the butting portion is larger than the outer diameter of the intermediate portion 21 of the first joint and the second joint. Therefore, gap portions (87, 88) are formed.
In 3) described above, the inner peripheral surface of the through hole of the male screw portion 85 is configured with the first inner peripheral surface and the second inner peripheral surface and a gap portion 88 formed in between having diameters quasi same as, larger than and smaller than the outer diameters of the end portion 22 and the intermediate portion 21.
The inner peripheral surface of the female nut 84 described in 4) above, the third inner peripheral surface and the fourth inner peripheral surface and a step portion 87 formed in between having diameters quasi same as, larger than and smaller than the outer diameters of the male screw portion 85 and the intermediate portion 21 of the joint.
The butted portion of the first joint and the second joint is stored in the through hole of the male screw portion 85 in a state wherein the gap portion 88 of the first joint and the gap portion 88 of the male screw portion are abutted.
Once the female nut 84 is screwed into and fixed to the male screw portion 85, the gap portion 87 of the female nut 84 and the gap portion 87 of the second joint are abutted.

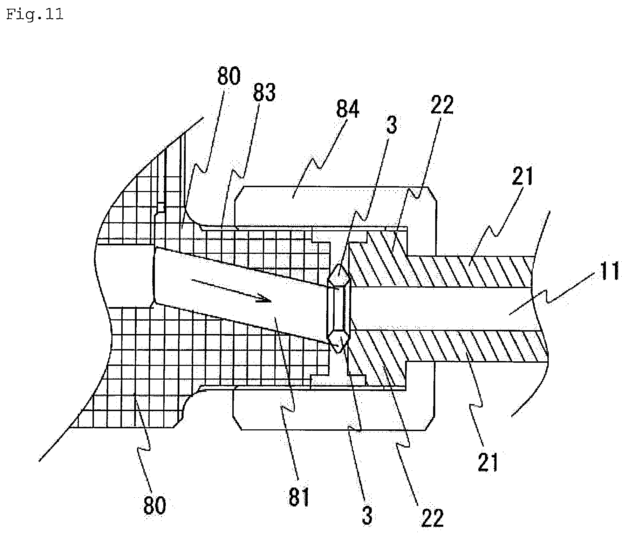

Next, the joint structures according to other embodiments are explained by referencing figure 11. Figure 11 shows a joint structure in a case where one end surface of the joint is a valve main body.
The joint structure shown in figure 11 employs a seal ring 3 made of a metal material, having a rhombic shape in the cut surface along the axis direction and abutting against the end surface of the joint opposing at the opposing pinnacle.
A recess of a shallow plate shape or ring shape is formed at the center of the end surface as the shape of the end surface of the joint in the aim to maintain the seal effectiveness at the butting portion of the end potion 22 of the pipe joint and the joint end portion of the valve main body 80. The taper angle of the inner peripheral surface of the recess is 59° and is made to be narrower than the taper angle 60° of the outer peripheral wall of the seal ring by 1°.
A shallow plate shaped or ring shaped recess is formed on each end surface, the end surface of the end portion of the pipe joint and the end surface of end portion of the joint of the valve main body 80, which heightens the adhesiveness between the tapered outer peripheral wall of the recess and the tapered outer peripheral surface of the seal ring 3, and improves the seal effectiveness and heightens the pressure resistance.

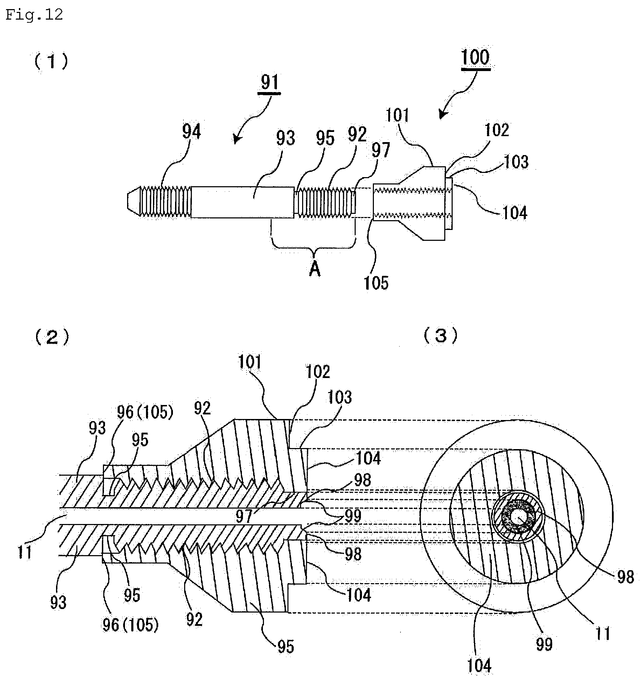

Next, the joint structure according to other embodiments is explained by referencing figure 12.
In the joint structure shown in figure 12(1), the pipe portion 91 and the end portion 100 exist as a separate member and are integrated by screwing. The outer diameter of the end portion 100 is larger than the outer diameter of the pipe portion 91. Screw threads are disposed at two places (92, 94) in the pipe portion 91. The screw thread 92 is screwed into a screw cutting formed at the inner wall of the end portion 100. The outer diameter of the outer peripheral protrusion at the end portion 100 is larger than the outer diameter of the intermediate portion 93 of the pipe portion 91 and the outer peripheral protrusion 101 of the end portion 100 is clamped under the butted state of the joint.
Figure 12(2) is a cross section of the portion of A in figure 12(1). A ditch 95 is formed between the screw thread 92 and the intermediate portion 93 and the end portion of the intermediate portion 93 forms a wall surface 96 of a ditch 95. The end portion 100 is designed to advance by screwing as far as the position where abutting against the wall surface 96 occurs. By this structure, the end surface 104 of the end portion 100 and the end surface 98 of the pipe portion 91 are arranged to form a flat surface by maintaining the error minimum. A recess 99 is formed at the center of the end surface 98 of the pipe portion 91. The engagement of the seal ring (not illustrated) to this recess 99 improves the seal effectiveness.
Figure 12(3) represents a state wherein the pipe portion 91 and the end portion 100 of the joint are integrated by screwing and the end portion of that integrated piece is viewed from the axis direction of the joint. A small gap between the end surface 98 of the pipe portion 91 and the end surface 104 of the end portion 100 can be seen. This is a gap between the outer peripheral wall 97 of the end portion of the screw thread 92 of the pipe portion 91 and the inner wall of the end portion 100.
According to this joint structure, a screw thread 92, a ditch 95 and a recess 99 are formed at the end portion 100 of an existing pipe by processing, which can be used as a joint for high pressure pipes.

### [Explanation of Signs]

- 1: Joint for high pressure pipes
- 2a, 20a: First joint
- 2b, 20b: Second joint
- 3, 3a: Seal ring
- 4, 4a, 4b,: Clamp
- 5, 5a, 5b, 7, 7a, 7b: Tightening bolt
- 6, 6a, 6b: Nut
- 11: Inner vacancy of pipe
- 21: Intermediate portion
- 22: End portion
- 23: End surface
- 24: Recess of end surface
- 24a: Taper
- 30a: First pipe
- 30b: Second pipe
- 41: Band portion
- 42: Screwing engagement portion
- 50: Pipe
- 51: Screwing engagement portion
- 52: Gland nut
- 54: End portion of pipe
- 55: Collar
- 60: Joint main body
- 61: Through-hole
- 62: Screw hole
- 70: Retainer
- 70a: Claw portion
- 71: groove portion
- 72, 87, 88: Step portion
- 80: Valve main body
- 83, 86: Male screw
- 84: Female nut
- 85: Male screw portion
- 91: Pipe portion
- 92, 94: Screw thread
- 93: Intermediate portion
- 95: Ditch
- 100: End portion

## Claims

1. A seal ring structure employed for a joint for high pressure pipes, comprising:
said seal ring structure comprising a seal ring and a retainer;
said seal ring being in a donut shape, having a cross section being a square with two diagonal lines orthogonal to each other, one diagonal line being in parallel with a perpendicular line of a plane formed in a donut shape, each of the opposing pinnacles on the diagonal lines being abutted against the edge surface of the joint; and
said retainer being engaged with the peripheral edge of the end surface of the joint.

2. A seal ring structure as set forth in claim 1, wherein further comprising:
in case of a plate shaped recess being formed at the center of the end surface of the joint, the taper angle of the outer peripheral wall of said seal ring being wider by 0° to 2° or narrower by 0° to 2° than the taper angle of the inner peripheral surface of said recess; and said seal ring being fittable with said recess.

3. A seal ring structure as set forth in claim 1, wherein further comprising:
in case of a ring shaped recess being formed at the center of the end surface of the joint, the taper angle of the outer peripheral wall of said seal ring being wider by 0° to 2° or narrower by 0° to 2° than the taper angle of the inner peripheral surface of said recess; and said seal ring being fittable with said recess.

4. A seal ring structure as set forth in either claim 2 or 3, wherein further comprising:
the taper angle of the peripheral edge of said seal ring being 10° to 80°.

5. A seal ring structure as set forth in either one of claims 1 to 4, wherein further comprising:
said retainer having at least three claw portions being disposed at a circumference of said seal ring, and having those claw portions being engaged with the circumference of end surface of the joint.

6. A seal ring structure as set forth in claim 5, wherein further comprising:
said retainer being disposed at the whole circumference of said seal ring.

7. A seal ring structure as set forth in claim 1, wherein further comprising:
said seal ring being an O ring made of cupper, brass or nickel.
